# EUROPÄISCHE PATENTSCHRIFT

(11) **EP 1 313 816 B1**
(45) Veröffentlichungstag und Bekanntmachung des Hinweises auf die Patenterteilung: **11.01.2006**
(21) Anmeldenummer: 01969677.2
(22) Anmeldetag: 30.08.2001
(51) Int. Cl.: C09D 11/00, C09B 67/00, C09D 17/00, B01F 17/50

(54) **WÄSSRIGE FARBMITTELZUBEREITUNG FÜR DEN TINTENSTRAHLDRUCK**
AQUEOUS DYE PREPARATION FOR INK JET PRINTING
COMPOSITION COLORANTE AQUEUSE POUR IMPRESSION A JET D'ENCRE

(30) Priorität: 31.08.2000 DE 10042900
(43) Veröffentlichungstag der Anmeldung: 28.05.2003
(73) Patentinhaber: BASF Aktiengesellschaft, 67056 Ludwigshafen (DE)
(72) Erfinder: BULLOCK, James, 69198 Schriesheim (DE); KRAPP, Michael, 67122 Altrip (DE); SIEMENSMEYER, Karl, 67227 Frankenthal (DE)
(74) Vertreter: Thalhammer, Wolfgang
(86) Internationale Anmeldenummer: PCT/EP2001/010042
(87) Internationale Veröffentlichungsnummer: WO 2002/018504

(56) Entgegenhaltungen:
- EP-A- 0 829 524
- US-A- 4 521 336
- PATENT ABSTRACTS OF JAPAN vol. 1998, no. 10, 31. August 1998 (1998-08-31) & JP 10 130524 A (TORAY IND INC), 19. Mai 1998 (1998-05-19)
- DATABASE WPI Section Ch, Week 199344 Derwent Publications Ltd., London, GB; Class A23, AN 1993-348635 XP002189232 & JP 05 255626 A (KANEBO LTD), 5. Oktober 1993 (1993-10-05)
- DATABASE WPI Section Ch, Week 200006 Derwent Publications Ltd., London, GB; Class G02, AN 1992-279724 XP002189233 & JP 02 995859 B (SEIKO EPSON CORP), 27. Dezember 1999 (1999-12-27)
- DATABASE WPI Section Ch, Week 199117 Derwent Publications Ltd., London, GB; Class A18, AN 1991-123028 XP002189234 & JP 03 064376 A (CANON KK), 19. März 1991 (1991-03-19)

## Beschreibung

Die vorliegende Erfindung betrifft die Verwendung einer wässrigen Farbmittelzubereitung, die kolloidal dispergierte Farbmittelteilchen und ein Dispergiermittel enthält, zum Bedrucken von flächenförmigen Substraten mittels Tintenstrahldruck.

Beim Tintenstrahldruck werden üblicherweise wässrige Tinten in kleinen Tröpfchen gleichmäßig durch eine Düse gepresst und direkt auf das Substrat gesprüht. An die Tinten, die beim Tintenstrahldruck-Verfahren eingesetzt werden, werden eine Reihe von Anforderungen gestellt. Sie müssen eine zum Drucken geeignete Viskosität und Oberflächenspannung aufweisen, sie müssen lagerstabil sein, d. h. sie sollen nicht koagulieren und das dispergierte Farbmittel soll sich nicht absetzen, und sie dürfen nicht zu einer Verstopfung der Druckerdüse führen.

Die Herstellung von Tinten auf der Basis von dispergierten Farbmitteln (z. B. Pigmenten, Dispersions- und Küpenfarbstoffen) für den Tintenstrahldruck (Ink-Jet-Tinten) erfolgt in der Regel in einem zweistufigen Verfahren. Im ersten Schritt wird durch Vermahlen des Farbmittels mit einem Dispergiermittel und gegebenenfalls weiteren Hilfsstoffen in einer schnelllaufenden Mühle eine Paste erzeugt. Im zweiten Verfahrensschritt erfolgt die Herstellung der Tinte durch Verdünnen der Paste mit Wasser und gegebenenfalls weiteren üblichen Hilfsmitteln.

Aufgrund der besonderen Anforderungen an Ink-Jet-Tinten sind Dispergiermittel, die zur Herstellung von Farbflotten zur Garn- oder Stückfärbung empfohlen sind, nicht notwendigerweise zur Herstellung von Ink-Jet-Tinten geeignet.

Die DE 197 27 766 betrifft Pigmentzubereitungen für das Ink-Jet-Verfahren, welche ein feinteiliges Pigment und ein Dispergiermittel auf der Basis von Arylsulfonsäure-Formaldehyd-Kondensationsprodukten oder von oxalkylierten Phenolen enthalten.

Die DE 197 49 082 A beschreibt wässrige Pigmentzubereitungen für das Ink-Jet-Verfahren, welche navoskalige anorganische Pigmente und ein Dispergiermittel mit einem mittleren Molekulargewicht von wenigstens 1000, insbesondere Ligninsulfonate mit einem mittleren Molekulargewicht von größer 1000 bis 100 000 enthalten.

Es hat sich gezeigt, dass bei der gemeinsamen Vermahlung eines Farbmittels mit einem Dispergiermittel in einer schnelllaufenden Mühle häufig hochviskose und/oder thixotrope Pasten erhalten werden. In diesen Fällen wird eine für eine Ink-Jet-Tinte hinreichend kleine Teilchengröße des Farbmittels nicht oder nur nach sehr langen Mahldauern erreicht. Eine aus diesen hochviskosen oder thioxotropen Pasten hergestellte Tinte zeigt unzureichende Gebrauchseigenschaften beim Tintenstrahldruck. Vielfach neigen die Farbmittelteilchen nach dem Vermahlen oder in der Tinte zur Agglomeration, was sich z. B. dadurch feststellen lässt, das beim Filtrieren der Tinte über ein feinmaschiges Sieb nennenswerte Siebrückstände zurückbleiben.

Die EP 0 829 524 A beschreibt ein unter sulfoniertem und sulfomethyliertem Lignin ausgewähltes Dispergiermittel, das im Wesentlichen keine Moleküle unterhalb eines Molekulargewichts von 3000 enthält, sowie eine das Dispergiermittel enthaltende Farbmittelzubereitung und deren Verwendung zum Färben natürlicher und synthetischer Fasern. Die Verwendung der Farbmittelzubereitung für den Tintenstrahldruck ist nicht beschrieben oder angeregt.

Der vorliegenden Erfindung liegt daher die Aufgabe zugrunde, wässrige Farbmittelzubereitungen anzugeben, die sich vorteilhaft zum Bedrucken von flächenförmigen Substraten mittels Tintenstrahldruck eignen und bei deren Herstellung die oben geschilderten Probleme nicht auftreten.

Die Erfindung betrifft die Verwendung einer wässrigen Farbmittelzubereitung, die kolloidal dispergierte Farbmittelteilchen und wenigstens ein Dispergiermittel enthält, das unter sulfonierten und/oder sulfomethylierten Ligninen mit einem gewichtsmittleren Molekulargewicht von wenigstens 25000 ausgewählt ist, worin mehr als 50 Gew.-% der Lignine ein Molekulargewicht von mehr als 10000 aufweisen, zum Bedrucken von flächenförmigen Substraten mittels Tintenstrahldruck.

Die Erfindung betrifft außerdem ein Verfahren zur Herstellung einer Farbmittelzubereitung, bei dem man ein Farbmittel in Gegenwart eines Dispergiermittels, das unter sulfonierten und/oder sulfomethylierten Ligninen mit einem gewichtsmittleren Molekulargewicht von wenigstens 25000 ausgewählt ist, wobei mehr als 50 Gew.-% der Moleküle ein Molekulargewicht von mehr als 10000 aufweisen, zu einem Mahlgut vermahlt, das Farbmittelteilchen einer mittleren Teilchengröße von weniger als 1 µm enthält, und das Mahlgut mit Wasser zu einer Farbmittelzubereitung mit einem Farbmittelgehalt von 0,1 bis 20 Gew.-% verdünnt.

Die Erfindung betrifft außerdem eine für den Tintenstrahldruck geeignete wässrige Farbmittelzubereitung, enthaltend kolloidal dispergierte Farbmittelteilchen einer mittleren Teilchengröße von weniger als 1 µm und wenigstens ein Dispergiermittel, das unter sulfonierten und/oder sulfomethylierten Ligninen mit einem gewichtsmittleren Molekulargewicht von wenigstens 25000 ausgewählt ist, wobei mehr als 50 Gew.-% der Moleküle ein Molekulargewicht von mehr als 10000 aufweisen.

Vorzugsweise ist das Dispergiermittel unter sulfonierten und/oder sulfomethylierten Ligninen mit einem gewichtsmittleren Molekulargewicht von mehr als 26000, z. B. im Bereich von 26000 bis 35000, ausgewählt, und vorzugsweise weisen mehr als 54 Gew.-% der Moleküle ein Molekulargewicht von mehr als 10000 auf. Die Uneinheitlichkeit U liegt vorzugsweise im Bereich von 7 bis 11, insbesondere 8 bis 10, wobei als Uneinheitlichkeit der Quotient des gewichtsmittleren durch das zahlenmittlere Molekulargewicht definiert ist.

Der Sulfonierungs-/Sulfomethylierungsgrad (Gew.-% Sulfosäuregruppen) beträgt vorzugsweise 4 bis 6.

Geeignete Dispergiermittel aus der Klasse der sulfonierten und/oder sulfomethylierten Lignine lassen sich leicht anhand ihrer Molekulargewichtsverteilung identifizieren. Die Bestimmung der Molekulargewichtsverteilung erfolgt zweckmäßigerweise durch Gelpermeationschromatographie mit UV-Detektion. Geeignete Gelpermeationschromatographie-Säulen sind z. B. HEMA Bio von der Firma Polymer Standards GmbH, Mainz, mit Porositäten von 40, 100 und 1000 Å. Als Laufmittel eignet sich ein Gemisch von 60 Gew.-% 1 M wässriger Natriumnitratlösung, 30 Gew.-% Tetrahydrofuran und 10 Gew.-% Acetonitril. Die Kalibrierung erfolgt zweckmäßigerweise durch Polystyrolsulfonate (Natriumsalzform) bekannten Molekulargewichts.

Anhand einer Auftragung des Gewichtsanteils von Molekülen einer Molekulargewichtsklasse gegen das Molekulargewicht kann durch Integration der Anteil der Moleküle mit einem Molekulargewicht von mehr als 10000 ermittelt werden.

Lignin ist ein amorphes Phenylpropanpolymer, das in Verbindung mit den Zellwandpolysacchariden vieler Pflanzen vorkommt. Für die Herstellung des erfindungsgemäß verwendeten Dispergiermittels geht man zweckmäßigerweise von Ligninen aus, die großtechnisch durch dem Fachmann bekannte Holzaufschlussverfahren gewonnen werden, wie z. B. das Sulfit-Verfahren, Kraft-Verfahren, Natron-Verfahren usw. Beim Kraft-Verfahren werden Holzschnitzel einem Aufschluss im stark alkalischen Medium unterzogen, wobei die natürlichen Ligninpolymere zu Bruchstücken mit einem breiten Spektrum verschiedener Molekulargewichte abgebaut werden. Die bei diesem Verfahren anfallenden Lignine bilden lösliche Alkalimetallsalze, die sich in der Kochlauge lösen und so von der Cellulose abgetrennt werden können. Die Lignine werden aus der Kochlauge durch Absenken des pH-Werts ausgefällt, wobei die Phenolatgruppen der Ligninmoleküle in ihre freie Phenolform umgewandelt werden. Die beim Kraft-Verfahren erhaltenen Lignine können in einem weiteren Verfahrensschritt sulfoniert und/oder sulfomethyliert werden. Die Sulfonierung wird geeigneterweise durch Behandlung mit Sulfiten oder Bisulfiten durchgeführt. Die Sulfomethylierung gelingt durch Umsetzung des Lignins mit Sulfit und Formaldehyd, wie z. B. in der US 2,680,113 beschrieben.

Beim Sulfitaufschluss werden Holzschnitzel mit Lösungen von Hydrogensulfiten oder Sulfiten gekocht. Je nachdem, ob die Hydrogensulfit-Lösungen zusätzlich Schwefeldioxid enthalten oder nicht, bezeichnet man die Verfahren als saure Bisulfit-Verfahren oder nur als Bisulfit-Verfahren. Beim Sulfitaufschluss wird das Lignin sulfoniert, hydrolytisch gespalten und als sulfoniertes Lignin gelöst. Es kann dann durch Ansäuern, Koagulation und Filtration oder Dekantieren isoliert und erforderlichenfalls zur Erhöhung der Löslichkeit weiter sulfoniert und/oder sulfomethyliert werden.

Die nach den vorstehenden Verfahren erhaltenen sulfonierten und/oder sulfomethylierten Lignine weisen in der Regel eine breite Molekulargewichtsverteilung auf. Bevor sie zur Herstellung der erfindungsgemäß verwendeten Farbmittelzubereitung herangezogen werden können, ist es in der Regel erforderlich, niedermolekulare Anteile daraus zu entfernen. Das Verfahren zur Entfernung der niedermolekularen Anteile ist nicht kritisch. Besonders bevorzugt ist hierfür jedoch das Verfahren der Ultrafiltration über eine Ultrafiltrationsmembran mit einer Ausschlussgrenze von 3000, vorzugsweise 10000. Alternativ ist zur Entfernung niedermolekularer Anteile auch das Verfahren der reversen Osmose geeignet.

Es ist auch möglich, die beim Holzaufschluss erhaltenen Lignine einer Behandlung zur Entfernung niedermolekularer Anteile zu unterziehen und anschließend zu sulfonieren und/oder sulfomethylieren.

Für die vorliegenden Zwecke geeignete Lignin-Dispergiermittel sind unter der Bezeichnung HyAct von Westvaco Corp. im Handel erhältlich. Die Herstellung geeigneter Lignin-Dispergiermittel ist in der EP 0 829 524 beschrieben.

Neben dem Lignin-Dispergiermittel enthält die wässrige Farbmittelzubereitung kolloidal dispergierte Farbmittelteilchen. Die Farbmittel sind unter organischen oder anorganischen Pigmenten oder vorzugsweise Dispersionsfarbstoffen ausgewählt. Als organische Pigmente sind hierbei auch Küpen-Farbstoffe zu verstehen. Die bevorzugten Dispersionsfarbstoffe sind unter wasserunlöslichen oder schwer wasserlöslichen Azo-, Anthrachinon-, Chinopthalon-, Methin- und Azamethinfarbstoffen ausgewählt. Besonders geeignet sind folgende:
C. I. Disperse Yellow 1, 2, 3, 4, 5, 6, 7, 8, 9, 10, 11, 11:1, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98, 99, 100, 101, 102, 103, 104, 105, 106, 107, 108, 109, 110, 111, 112, 113, 114, 115, 116, 117, 118, 119, 120, 121, 179, 180, 181, 182, 183, 184, 184:1, 200, 201, 202, 203, 204, 205, 206, 207, 208, 209, 210, 211, 212, 213, 214, 215, 216, 217, 218, 219, 220, 221, 222, 223, 224, 225, 226, 227, 228.
C. I. Disperse Orange 1, 2, 3, 3:3, 4, 5, 6, 7, 8, 9, 10, 11, 12, 13, 14, 15, 16, 17, 18,19, 20, 21, 22, 23, 24, 25, 25:1, 26, 27, 28, 29, 30, 31, 32, 33, 34, 35, 36, 37, 38, 39, 40, 41, 41:1, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 126, 127, 128, 129, 130, 131, 136, 137, 138, 139, 140, 141, 142, 143, 145, 146, 147, 148.
C. I. Disperse Red 1, 2, 3, 4, 5, 5:1, 6, 7, 8, 9, 10, 11, 12, 13, 14, 15, 16, 17, 18, 19, 20, 21, 22, 23, 24, 25, 26, 27, 28, 29, 30, 30:1, 31, 32, 33, 34, 35, 36, 38, 39, 40, 41, 43, 43:1, 46, 48, 50, 51, 52, 53, 54, 55, 55:1, 56, 58, 59, 60, 61, 63, 65, 66, 69, 70, 72, 73, 74, 75, 76, 77, 79, 80, 81, 82, 84, 85, 86, 86: 1, 87, 88, 89, 90, 91, 92, 93, 94, 96, 97, 98, 100, 102, 103, 104, 105, 106, 107, 108, 109, 110, 111, 112, 113, 115, 116, 117, 118, 120, 121, 122, 123, 125, 126, 127, 128, 129, 130, 131, 132, 133, 134, 135, 136, 137, 138, 139, 140, 141, 142, 143, 144, 145, 146, 147, 148, 149, 150, 151, 151:1, 152, 153, 154, 155, 156, 157, 158, 159, 160, 161, 162, 163, 164, 165, 166, 167, 167:1, 168, 169, 170, 171, 172, 173, 174, 175, 176, 177, 178, 179, 180, 181, 182, 183, 184, 185, 186, 187, 188, 189, 190, 190:1, 191, 191:1, 192, 193, 194, 195, 211, 223, 273, 274, 275, 276, 277, 278, 279, 280, 281, 302:1, 305, 306, 307, 308, 309, 310, 311, 312, 313, 314, 315, 316, 317, 318, 319, 320, 321, 322, 323, 324, 325, 326, 327, 328 329, 330, 331, 332, 333, 334, 335, 336, 338, 339, 340, 341, 342, 343, 344, 346, 347, 348, 349, 356, 367.
C. I. Disperse Violet 1, 2, 3, 4, 4:1, 5, 6, 7, 8, 9, 10, 11, 12, 13, 14, 15, 16, 17, 18, 19, 20, 21, 22, 23, 24, 25, 26, 27, 28, 29, 31, 33, 34, 35, 36, 37, 38, 39, 40, 41, 42, 43, 44, 45, 46, 47, 48, 49, 50, 51, 52, 53, 54, 55, 56, 57, 58, 59, 60, 81, 86, 87, 88, 89, 91, 92, 93, 94, 95, 96, 97.
C. I. Disperse Blue 1, 1:1, 2, 3, 3:1, 4, 5, 6, 7, 7:1, 8, 9, 10, 11, 12, 13, 13:1, 14, 15, 16, 17, 18, 19, 20, 21, 22, 23, 23:1, 24, 25, 26, 27, 28, 29, 30, 31, 32, 33, 34, 35, 36, 38, 39, 40, 42, 43, 44, 45, 47, 48, 49, 51, 52, 53, 54, 55, 56, 58, 60, 60:1, 61, 62, 63, 64, 64:1, 65, 66, 68, 70, 72, 73, 75, 76, 77, 79, 80, 81, 81:1, 82, 83, 84, 85, 86, 87, 88, 89, 90, 91, 92, 93, 94, 95, 96, 97, 98, 99, 100, 101, 102, 103, 104, 105, 106, 107, 108, 109, 111, 112, 113, 114, 115, 116, 117, 118, 119, 121, 122, 123, 124, 125, 126, 127, 128, 130, 131, 132, 133, 134, 136, 137, 138, 139, 140, 141, 142, 143, 144, 145, 146, 147, 148, 149, 150, 151, 152, 153, 154, 155, 156, 158, 159, 160, 161, 162, 163, 164, 165, 165:2, 166, 167, 168, 169, 170, 171, 172, 173, 174, 175, 195, 281, 282, 283, 283:1, 284, 285, 286, 287, 288, 289, 290, 291, 292, 293, 294, 316, 317, 318, 319, 320, 321, 322, 323, 324, 325, 326, 327, 328, 329, 330, 331, 332, 333, 334, 335, 336, 337, 338, 339, 340, 341, 342, 343, 344, 345, 346, 347, 349.
C. I. Disperse Green 1, 2, 5, 6, 9.
C. I. Disperse Brown 1, 2, 3, 4, 4:1, 5, 7, 8, 9, 10, 11, 18, 19, 20, 21.
C. I. Disperse Black 1, 3, 4, 5, 6, 7, 8, 9, 10, 11, 12, 13, 14, 15, 20, 22, 24, 25, 26, 27, 28, 29, 29:1, 30, 31, 32, 33, 34, 36.
   oder einen Solventfarbstoff aus der folgenden Colour Index Liste:
C. I. Solvent Yellow 2, 3, 7, 12, 13, 14, 16, 18, 19, 21, 25, 25:1, 27, 28, 29, 30, 33, 34, 36, 42, 43, 44, 47, 56, 62, 72, 73, 77, 79, 81, 82, 83, 83:1, 88, 89, 90, 93, 94, 96, 98, 104, 107, 114, 116, 117, 124, 130, 131, 133, 135, 141, 143, 145, 145, 146, 157, 160:1, 161, 162, 163, 167, 169, 172, 174, 175, 176, 179, 180, 181, 182, 183, 184, 185, 186, 187, 189, 190, 191.
C. I. Solvent Orange 1, 2, 3, 4, 5, 7, 11, 14, 20, 23, 25, 31A, 40:1, 41, 45, 54, 56, 58, 60, 62, 63, 70, 75, 77, 80, 81, 86, 99, 102, 103, 105, 106, 107, 108, 109, 110, 111, 112, 113.
C. I. Solvent Red 1, 2, 3, 4, 8, 16, 17, 18, 19, 23, 24, 25, 26, 27, 30, 33, 35, 41, 43, 45, 48, 49, 52, 68, 69, 72, 73, 83:1, 84:1, 89, 90, 90:1, 91, 92, 106, 109, 111, 118, 119, 122, 124, 125, 127, 130, 132, 135, 141, 143, 145, 146, 149, 150, 151, 155, 160, 161, 164, 164:1, 165, 166, 168, 169, 172, 175, 179, 180, 181, 182, 195, 196, 197, 198, 207, 208, 210, 212, 214, 215, 218, 222, 223, 225, 227, 229, 230, 233, 234, 235, 236, 238, 239, 240, 241, 242, 243, 244, 245, 247, 248.
C. I. Solvent Violet 2, 8, 9, 11, 13, 14, 21, 21:1, 26, 31, 36, 37, 38, 45, 46, 47, 48, 49, 50, 51, 55, 56, 57, 58, 59, 60, 61.
C. I. Solvent Blue 2, 3, 4, 5, 7, 18, 25, 26, 35, 36, 37, 38, 43, 44, 45, 48, 51, 58, 59, 59:1, 63, 64, 67, 68, 69, 70, 78, 79, 83, 94, 97, 98, 99, 100, 101, 102, 104, 105, 111, 112, 122, 124, 128, 129, 132, 136, 137, 138, 139, 143.
C. I. Solvent Green 1, 3, 4, 5, 7, 28, 29, 32, 33, 34, 35.
C. I. Solvent Brown 1, 3, 4, 5, 12, 20, 22, 28, 38, 41, 42, 43, 44, 52, 53, 59, 60, 61, 62, 63.
C. I. Solvent Black 3, 5, 5:2, 7, 13, 22, 22:1, 26, 27, 28, 29, 34, 35, 43, 45, 46, 48, 49, 50.

oder einen der folgenden Dispersionsfarbstoffe, die keinen Colour Index aufweisen: 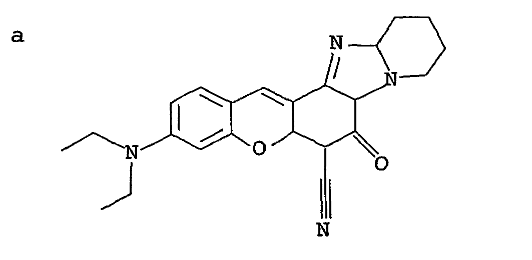 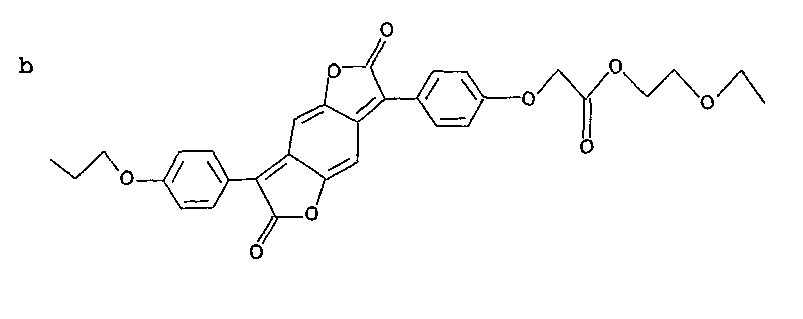 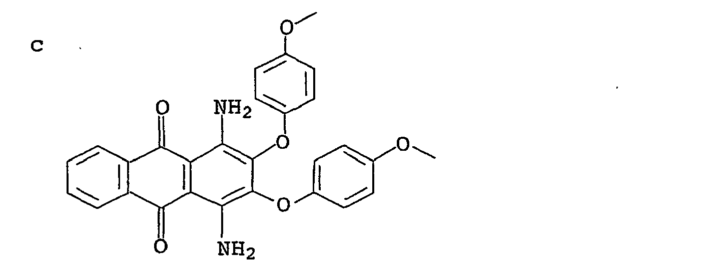 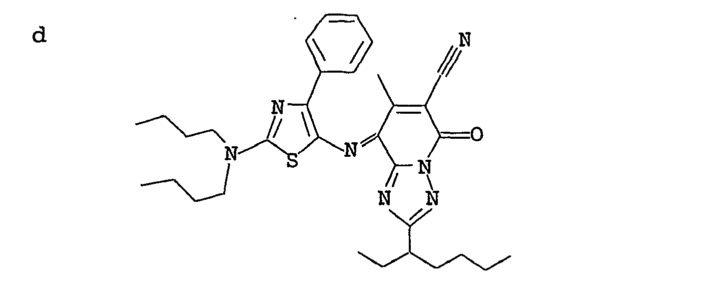 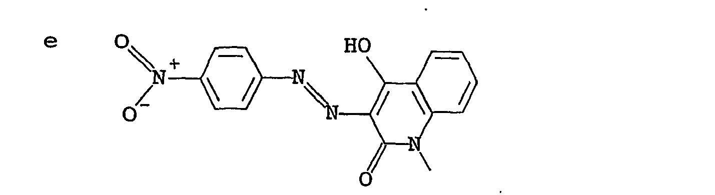 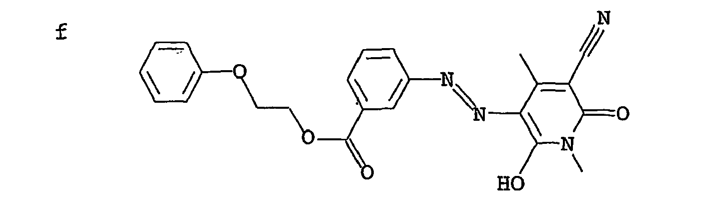 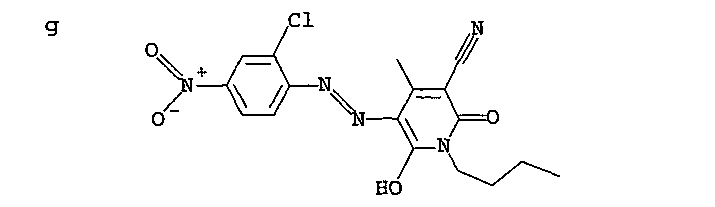 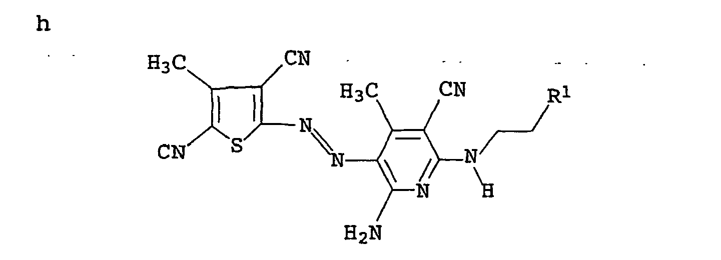
worin
R¹ vorzugsweise für (CH₂)ₙ-O-(CH₂)ₘ-O-R², n für 0 oder 1, m für eine ganze Zahl von 2 bis 4 und R² für H oder COCH₃ steht. Bei dem Farbstoff h kann es sich um eine Einzelkomponente oder eine Mischung von Verbindungen mit der allgemeinen Struktur h handeln.

Zweckmäßigerweise wird das Farbmittel zunächst mit dem Dispergiermittel in eine Farbmittelpaste überführt. Die Farbmittelpasten werden dann zur Herstellung der gebrauchsfertigen Farbmittelzubereitung (Ink-Jet-Tinte) verwendet. Man mischt das Farbmittel, beispielsweise in Form eines wasserhaltigen Presskuchens oder in Form eines trockenen Farbmittelpulvers, zusammen mit dem Dispergiermittel, gegebenenfalls in Gegenwart eines Verdünnungsmittels, wie Wasser. Die erhaltene Mischung mahlt man anschließend in einer Mühle, um die gewünschte Farbmittelteilchengrößenverteilung einzustellen. Als Mühlen sind Perlmühlen, Doppelzylinder-Perlmühlen oder Zentrifugalwirbelbettmühlen besonders geeignet. Schließlich nimmt man die Endeinstellung der Zubereitung vor, indem man noch entsprechende Mengen Wasser und gegebenenfalls weitere Hilfsmittel zusetzt. Vorteilhaft filtriert man anschließend über ein Feinsieb oder einen Filter, z. B. mit einer Porengröße von 0,5 bis 10 µm.

Die mittlere Teilchengröße der Farbmittelteilchen liegt in der Regel im Bereich von 5 nm bis 1 µm, insbesondere 5 nm bis 0,5 µm (x₅₀-Wert, gemessen mittels quasi-elastischer Lichtstreuung, vgl. Bruce, J. Berne und Robert Pecora, "Dynamic Light Scattering", John Wiley & Sons Inc. 1976, S. 169f).

Die erfindungsgemäß verwendeten Farbmittelzubereitungen enthalten in der Regel 0,1 bis 20 Gew.-%, vorzugsweise 0,2 bis 10 Gew.-%, Farbmittel. Sie enthalten in der Regel 0,1 bis 20 Gew.-%, vorzugsweise 0,5 bis 10 Gew.-%, Dispergiermittel. Wasser stellt den Hauptbestandteil der erfindungsgemäß verwendeten Farbmittelzubereitungen dar. Sein Gehalt beträgt in der Regel 35 bis 90 Gew.-%, bevorzugt 45 bis 80 Gew.-%.

Vorzugsweise enthalten die Farbmittelzubereitungen außerdem ein Feuchthaltemittel. Als Feuchthaltemittel eignen sich mehrwertige, insbesondere 3 bis 8 Kohlenstoffatome enthaltende Alkohole, wie Glycerin, Erythrit, Pentaerythrit, Pentite wie Arabit, Adonit und Xylit, Hexite wie Sorbit, Mannit und Dulcit. Weiter eignen sich Polyalkylenglykole und Polyalkylenglykolmonoalkylether, insbesondere mit einem mittleren Molekulargewicht von 100 bis 1500, wobei Polyethylenglykole und Polyethylenglykolether mit einem mittleren Molekulargewicht von kleiner 800 besonders bevorzugt sind. Als Beispiele hierfür sind Di-, Tri- und Tetraethylenglykol, Diethylenglykolmonomethyl-, -ethyl-, -propyl- und -butylether und Trimethylenglykolmonomethyl-, -ethyl-, -propyl- und -butylether. Weiterhin geeignet sind Pyrrolidone und N-Alkylpyrrolidone, wie N-Methylpyrrolidone. Der Anteil des Feuchthaltemittels in den Farbmittelzubereitungen beträgt in der Regel 0 bis 15 Gew.-%. Auch geeignet als Feuchthaltemittel sind Thioether-Analoge mehrerer Glykole.

In der Regel enthalten die Farbmittelzubereitungen weitere Hilfsmittel, wie Konservierungsmittel, z. B. 1,2-Benzisothiazolin-3-on und dessen Alkalimetallsalze, Glutardialdehyd oder Tetramethylolacetylenharnstoff; Antioxidantien; Entgaser/Entschäumer, wie Acetylendiole und ethoxylierte Acetylendiole, die üblicherweise 20 bis 40 Mol Ethylenoxid pro Mol Acetylendiol enthalten; Viskositätsregler, Verlaufshilfsmittel, Benetzer, Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer und Antistatikmittel. Wenn diese Mittel Bestandteil der Farbmittelzubereitungen sind, beträgt ihre Gesamtmenge in der Regel weniger als 1 Gew.-%, bezogen auf das Gewicht der Zubereitung.

Die erfindungsgemäß verwendeten Farbmittelzubereitungen weisen üblicherweise eine Viskosität von 1 bis 20 mm²/sec, vorzugsweise 2 bis 15 mm²/sec, auf. Die Oberflächenspannung der erfindungsgemäß verwendeten Farbmittelzubereitungen beträgt in der Regel 20 bis 70 mN/m. Der pH-Wert liegt im Allgemeinen bei 5 bis 11, vorzugsweise 6 bis 10.

Beim Tintenstrahldruck-Verfahren (Ink-Jet-Verfahren) wird die wässrige Farbmittelzubereitung in kleinen Tröpfchen direkt auf das Substrat gesprüht. Man unterscheidet dabei ein kontinuierliches Verfahren, bei dem die Farbmittelzubereitung gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19(8), S. 23-29, 1987, und Band 21(6), S. 27-32, 1989, beschrieben.

Die erfindungsgemäß verwendeten Farbmittelzubereitungen können auf alle Arten von Substratmaterialien gedruckt werden. Als Substratmaterialien seien z. B.
- cellulosehaltige Materialien, wie Papier, Pappe, Karton, Holz und Holzwerkstoffe, die auch lackiert oder anderweitig beschichtet sein können,
- metallische Materialien, wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien, wie Glas, Porzellan und Keramik, die ebenfalls beschichtet sein können,
- polymere Materialien jeder Art, wie Polystyrol, Polyamide, Polyester, Polyethylen, Polypropylen, Melaminharze, Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien, wie Fasern, Garne, Zwirne, Maschenware, Webware, Non-wovens und konfektionierte Ware aus Polyester, modifiziertem Polyester, Polyestermischgewebe, cellulosehaltigen Materialien, wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Veloursleder,
genannt.

Alternativ können die durch Tintenstrahldruck erzeugten Bilder und Muster zunächst auf ein Zwischensubstrat, z. B. ein Transferpapier, aufgebracht und im Kontakt mit einem zweiten Substrat, z. B. einem textilen Substrat, auf dieses übertragen werden. Dieser Prozess spielt sich häufig bei erhöhter Temperatur, z. B. bei 180 bis 220 °C, in einer Presse ab. Es kommt dabei zu einer Sublimation der Farbmittel, die durch Diffusion in das zweite Substrat eindringen.

Um das auf dem Substrat erzeugte Druckmotiv zu fixieren, kann man anschließend ein Bindemittel, gewünschtenfalls in Form einer wässrigen Dispersion oder Emulsion, auftragen und dessen Härtung herbeiführen. Man kann strahlungshärtbare, thermisch härtbare oder durch Luftoxidation trocknende Bindemittel oder physikalisch trocknende Bindemitteldispersionen oder -emulsionen einsetzen. Als Beispiele für strahlungshärtbare Bindemittel seien Acrylatgruppen-haltige, Vinylgruppen-haltige und/oder Epoxygruppen-haltige Monomere, Prepolymere, Polymere und deren Mischungen genannt.

Bei den thermisch härtbaren Bindemitteln erfolgt die Vernetzung in der Regel über Polykondensations- oder Polyadditionsreaktionen. Besonders geeignet sind z. B. durch Polykondensation vernetzende Bindemittel auf Basis von Methylolgruppen-haltigen Acrylaten.

Beispiele für lufttrocknende Bindemittel, bei denen aliphatische Doppelbindungen durch Einwirkung von Luftsauerstoff oxidativ vernetzt werden, sind trocknende Öle wie Leinöl, Holzöl und Saffloröl.

Die Erfindung wird durch die folgenden Beispiele und Vergleichsbeispiele näher veranschaulicht.

In den Beispielen wurden folgende Dispergiermittel verwendet:

D1 ist ein sulfoniertes Lignin mit einem gewichtsmittleren Molekulargewicht von 30500, einer Uneinheitlichkeit von 8,8, worin 56,5 Gew.-% aller Moleküle ein Molekulargewicht von mehr als 10000 aufweisen;

D2 ist ein sulfoniertes Lignin mit einem gewichtsmittleren Molekulargewicht von 18100, einer Uneinheitlichkeit von 9,6, worin 40,0 Gew.-% aller Moleküle ein Molekulargewicht von mehr als 10000 aufweisen.

D3 ist ein Arylsulfonsäure-Formaldehyd-Kondensationsprodukt (wie in z. B. DE 197 54 025 und DE 197 27 766 beschrieben) mit einem gewichtsmittleren Molekulargewicht von 5600, einer Uneinheitlichkeit von 7,0, worin 18,2 Gew.-% aller Moleküle ein Molekulargewicht von mehr als 10000 aufweisen.

### Beispiel 1

15 Gew.-Teile Solvent Yellow 163, 10 Gew.-Teile D1, 0,9 Gew.-Teile Biozid wurden in einer DCP-Superflow-Mühle so lange gemahlen, bis der x₅₀-Wert 0,44 µm betrug. 35 Gew.-Teile des Mahlguts wurden mit 15 Gew.-Teilen Diethylenglykol und 0,6 Gew.-Teilen Biozid versetzt und mit Wasser auf 100 Gew.-Teile aufgefüllt, gemischt und über ein Sieb mit einer Porengröße von 1 µm filtriert. Auf dem Sieb blieb praktisch kein Rückstand zurück. Die Tinte ließ sich problemlos verdrucken.

### Vergleichsbeispiel 1

15 Gew.-Teile Solvent Yellow 163, 15 Gew.-Teile D2 und 0,9 Gew.-Teile Biozid wurden in einer DCP-Superflow-Mühle so lange gemahlen, bis der x₅₀-Wert 0,45 µm betrug. 37 Gew.-Teile des Mahlguts wurden mit 10 Gew.-Teilen Glyzerin und 0,6 Gew.-Teilen Biozid versetzt und mit Wasser auf 100 Gew.-Teile aufgefüllt und über ein Sieb mit einer Porengröße von 1 µm filtriert. Auf dem Sieb blieb ein deutlicher Siebrückstand zurück. Die hergestellte Tinte war nicht verdruckbar.

Bei einer Wiederholung von Vergleichsbeispiel 1, wobei die 10 Gew.-Teile Glyzerin durch 10 Gew.-Teile 70 %ige wässrige Sorbitlösung ersetzt wurden, erhielt man das gleiche Ergebnis.

### Beispiel 2

15 Gew.-Teile eines Farbstoffs der oben dargestellten Struktur h, 7,5 Gew.-Teile D1 und 0,9 Gew.-Teile Biozid wurden mit Wasser auf 100 Gew.-Teile aufgefüllt und in einer Tex-Mühle so lange gemahlen, bis der x₅₀-Wert 0,56 µm betrug. 33 Gew.-Teile des Mahlguts wurden mit 10 Gew.-Teilen 70 %iger wässriger Sorbitlösung und 0,6 Gew.-Teilen Biozid versetzt und mit Wasser auf 100 Gew.-Teile aufgefüllt und über ein Sieb mit einer Porengröße von 1 µm filtriert. Die erhaltene Tinte zeigte eine Viskosität von 2,08 mm²/sec und eine Oberflächenspannung von 48,1 mN/m.

### Vergleichsbeispiel 2

15 Gew.-Teile eines Farbstoffs der oben dargestellten Struktur h, 7,5 Gew.-Teile D2 und 0,9 Gew.-Teile Biozid wurden mit Wasser auf 100 Gew.-Teile aufgefüllt und in einer Tex-Mühle so lange gemahlen, bis der x₅₀-Wert 0,63 µm betrug. Es wurde ein hochviskoses, schäumendes Mahlgut erhalten. 50 Gew.-Teile Mahlgut, 10 Gew.-Teile 70 %ige wässrige Sorbitlösung und 0,6 Gew.-Teile Biozid wurden mit Wasser auf 100 Gew.-Teile aufgefüllt und über ein Sieb mit einer Porengröße von 1 µm filtriert. Diese erhaltene Tinte wies eine Viskosität von 2,80 mm²/sec und eine Oberflächenspannung von 47,5 mN/m auf. Die hochviskose und schäumende Tinte zeigte gegenüber der Tinte von Beispiel 2 ein schlechteres Laufverhalten beim Tintenstrahldruck.

### Beispiel 3

15 Gew.-Teile Disperse Blue 77, 15 Gew.-Teile D1 und 0,9 Gew.-Teile Biozid wurden in einer DCP-SF-Mühle so lange gemahlen, bis der x₅₀-Wert 0,38 betrug. 34 Gew.-Teile Mahlgut wurden mit 10 Gew.-Teilen Glyzerin und 0,6 Gew.-Teilen Biozid versetzt und mit Wasser auf 100 Gew.-Teile aufgefüllt und über ein Sieb mit einer Porengröße von 1 µm filtriert. Es blieb kein Rückstand auf dem Sieb, und die erhaltene Tinte ließ sich problemlos verdrucken.

### Vergleichsbeispiel 3

15 Gew.-Teile Disperse Blue 77, 7,5 Gew.-Teile D3, 15 Gew.-Teile Diethylenglykol und 0,9 Gew.-Teile Biozid wurden in einer Tex-Mühle so lange gemahlen, bis der x₅₀-Wert 0,43 betrug. Das Mahlgut war hochviskos und nicht zur Herstellung einer Tinte geeignet.

### Beispiel 4

15 Gew.-Teile C.I. Disperse Yellow 86, 10 Gew.-Teile D1, 10 Gew.-Teile Diethylenglykol und 0,9 Gew.-Teile Biozid wurden mit Wasser auf 100 Gew.-Teile aufgefüllt. Das Gemisch wurde in einer DCP-SF-Mühle so lange gemahlen, bis der x₅₀-Wert 0,43 µm betrug. 39 Gew.-Teile Mahlgut, 20 Gew.-Teile Diethylenglykol wurden mit 0,6 Gew.-Teilen Biozid versetzt und mit Wasser auf 100 Gew.-Teile aufgefüllt und über ein Sieb mit einer Porengröße von 1 µm filtriert. Die erhaltene Tinte wies eine Viskosität von 3,65 mm²/sec und eine Oberflächenspannung von 48,4 mN/m auf.

## Patentansprüche

1. Verwendung einer wässrigen Farbmittelzubereitung, die kolloidal dispergierte Farbmittelteilchen und wenigstens ein Dispergiermittel enthält, das unter sulfonierten und/oder sulfomethylierten Ligninen mit einem gewichtsmittleren Molekulargewicht von wenigstens 25000 ausgewählt ist, worin mehr als 50 Gew.-% der Moleküle ein Molekulargewicht von mehr als 10000 aufweisen, zum Bedrucken von flächenförmigen Substraten mittels Tintenstrahldruck.

2. Verwendung nach Anspruch 1, wobei das Dispergiermittel unter sulfonierten und/oder sulfomethylierten Ligninen mit einem gewichtsmittleren Molekulargewicht von mehr als 26000 ausgewählt ist.

3. Verwendung nach Anspruch 1 oder 2, wobei das Dispergiermittel unter sulfonierten und/oder sulfomethylierten Ligninen ausgewählt ist, worin mehr als 54 Gew.-% der Moleküle ein Molekulargewicht von mehr als 10000 aufweisen.

4. Verwendung nach einem der vorhergehenden Ansprüche, wobei das Dispergiermittel unter sulfonierten und/oder sulfomethylierten Ligninen mit einer Uneinheitlichkeit U im Bereich von 7 bis 11 ausgewählt ist.

5. Verwendung nach einem der vorhergehenden Ansprüche, wobei es sich bei dem Farbmittel um einen Dispersionsfarbstoff handelt.

6. Verfahren zum Bedrucken von flächenförmigen Substraten, bei dem man eine wässrige Farbmittelzubereitung in Tröpfchen auf das Substrat sprüht, wobei die Farbmittelzubereitung kolloidal dispergierte Farbmittelteilchen und wenigstens ein Dispergiermittel enthält, das unter sulfonierten und/oder sulfomethylierten Ligninen mit einem gewichtsmittleren Molekulargewicht von wenigstens 25000 ausgewählt ist, wobei mehr als 50 Gew.-% der Moleküle ein Molekulargewicht von mehr als 10000 aufweisen.

7. Verfahren zur Herstellung einer Farbmittelzubereitung, bei dem man ein Farbmittel in Gegenwart eines Dispergiermittels, das unter sulfonierten und/oder sulfomethylierten Ligninen mit einem gewichtsmittleren Molekulargewicht von wenigstens 25000 ausgewählt ist, wobei mehr als 50 Gew.-% der Moleküle ein Molekulargewicht von mehr als 10000 aufweisen, zu einem Mahlgut vermahlt, das Farbmittelteilchen einer mittleren Teilchengröße von weniger als 1 µm enthält, und das Mahlgut mit Wasser und gegebenenfalls zusätzlichen Hilfsmitteln zu einer Farbmittelzubereitung mit einem Farbmittelgehalt von 0,1 bis 20 Gew.-% verdünnt.

8. Für den Tintenstrahldruck geeignete wässrige Farbmittelzubereitung, enthaltend kolloidal dispergierte Farbmittelteilchen einer mittleren Teilchengröße von weniger als 1 µm und wenigstens ein Dispergiermittel, das unter sulfonierten und/oder sulfomethylierten Ligninen mit einem gewichtsmittleren Molekulargewicht von wenigstens 25000 ausgewählt ist, wobei mehr als 50 Gew.-% der Moleküle ein Molekulargewicht von mehr als 10000 aufweisen.

## Claims

1. The use of an aqueous colorant preparation comprising colloidally dispersed colorant particles and at least one dispersant selected from sulfonated and/or sulfomethylated lignins having a weight average molecular weight of not less than 25000 wherein more than 50% by weight of the molecules have a molecular weight of more than 10000, for printing sheetlike substrates by means of inkjet printing.

2. The use according to claim 1 wherein the dispersant is selected from sulfonated and/or sulfomethylated lignins having a weight average molecular weight of more than 26000.

3. The use according to claim 1 or 2 wherein the dispersant is selected from sulfonated and/or sulfomethylated lignins wherein more than 54% by weight of the molecules have a molecular weight of more than 10000.

4. The use according to any of the preceding claims wherein the dispersant is selected from sulfonated and/or sulfomethylated lignins having a polydispersity index PDI in the range from 7 to 11.

5. The use according to any of the preceding claims wherein the colorant is a disperse dye.

6. A process for printing sheetlike substrates, which comprises spraying an aqueous colorant preparation in droplets onto the substrate, the colorant preparation comprising colloidally dispersed colorant particles and at least one dispersant selected from sulfonated and/or sulfomethylated lignins having a weight average molecular weight of not less than 25000 wherein more than 50% by weight of the molecules have a molecular weight of more than 10000.

7. A method of producing a colorant preparation, which comprises grinding a colorant in the presence of a dispersant selected from sulfonated and/or sulfomethylated lignins having a weight average molecular weight of at least 25000 wherein more than 50% by weight of the molecules have a molecular weight of more than 10000 to form a millbase comprising colorant particles having a median particle size of less than 1 µm and diluting the millbase with water and if appropriate additional auxiliaries to form a colorant preparation having a colorant content of from 0.1 to 20% by weight.

8. An aqueous colorant preparation useful for inkjet printing, comprising colloidally dispersed colorant particles having a median particle size of less than 1 µm and at least one dispersant selected from sulfonated and/or sulfomethylated lignins having a weight average molecular weight of not less than 25000 wherein more than 50% by weight of the molecules have a molecular weight of more than 10000.

## Revendications

1. Utilisation d'une composition colorante aqueuse, qui contient des particules de colorant dispersées de manière colloïdale et au moins un agent dispersant qui est choisi parmi des lignines sulfonées et/ou sulfométhylées présentant un poids moléculaire moyen pondéral d'au moins 25.000, dans lesquelles plus de 50 % en poids des molécules présentent un poids moléculaire supérieur à 10.000, pour imprimer des substrats de forme plane au moyen d'une impression à jet d'encre.

2. Utilisation suivant la revendication 1, dans laquelle l'agent dispersant est choisi parmi des lignines sulfonées et/ou sulfométhylées présentant un poids moléculaire moyen pondéral supérieur à 26.000.

3. Utilisation suivant la revendication 1 ou 2, dans laquelle l'agent dispersant est choisi parmi des lignines sulfonées et/ou sulfométhylées, dans lesquelles plus de 54 % en poids des molécules présentent un poids moléculaire supérieur à 10.000.

4. Utilisation suivant l'une des revendications précédentes, dans laquelle l'agent dispersant est choisi parmi des lignines sulfonées et/ou sulfométhylées présentant une hétérogénéité U de l'ordre de 7 à 11.

5. Utilisation suivant l'une des revendications précédentes, dans laquelle, pour ce qui concerne le colorant, il s'agit d'un colorant de dispersion.

6. Procédé pour imprimer des substrats de forme plane, dans lequel on pulvérise une composition colorante aqueuse en gouttelettes sur le substrat, la composition colorante contenant des particules de colorant dispersées de manière colloïdale et au moins un agent dispersant qui est choisi parmi des lignines sulfonées et/ou sulfométhylées présentant un poids moléculaire moyen pondéral d'au moins 25.000, plus de 50 % en poids des molécules présentant un poids moléculaire supérieur à 10.000.

7. Procédé de préparation d'une composition colorante, dans lequel on broie un colorant en présence d'un agent dispersant qui est choisi parmi des lignines sulfonées et/ou sulfométhylées présentant un poids moléculaire moyen pondéral d'au moins 25.000, plus de 50 % en poids des molécules présentant un poids moléculaire de plus de 10.000, pour former une matière broyée qui contient des particules de colorant d'une taille moyenne de particule inférieure à 1 µm, et on dilue la matière broyée avec de l'eau et éventuellement des adjuvants supplémentaires pour former une composition colorante ayant une teneur en colorant de 0,1 à 20 % en poids.

8. Composition colorante aqueuse appropriée pour l'impression à jet d'encre, contenant des particules de colorant dispersées de manière colloïdale présentant une taille moyenne de particule inférieure à 1 µm et au moins un agent dispersant qui est choisi parmi des lignines sulfonées et/ou sulfométhylées présentant un poids moléculaire moyen pondéral d'au moins 25.000, plus de 50 % en poids des molécules présentant un poids moléculaire supérieur à 10.000.
